(19)

Europäisches Patentamt

European Patent Office

Office européen des brevets

(11) **EP 4 296 406 A1**

(12) **EUROPEAN PATENT APPLICATION**

(43) Date of publication:
**27.12.2023 Bulletin 2023/52**

(21) Application number: **22180414.9**

(22) Date of filing: **22.06.2022**

(51) International Patent Classification (IPC):
***C25B 13/02*** *(2006.01)*  ***C25B 13/07*** *(2021.01)*
***C25B 13/08*** *(2006.01)*

(52) Cooperative Patent Classification (CPC):
**C25B 13/02; C25B 13/07; C25B 13/08;** C25B 1/04;
C25B 1/30

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **VITO NV**
**2400 Mol (BE)**

(72) Inventors:
• **NAHRA, Fady**
**2400 Mol (BE)**

• **TSEHAYE, Misgina Tilahun**
**2400 Mol (BE)**
• **DE SCHEPPER, Wim**
**2400 Mol (BE)**
• **VAES, Jan**
**2400 Mol (BE)**
• **PANT, Deepak**
**2400 Mol (BE)**
• **MOLENBERGHS, Bart**
**2400 Mol (BE)**

(74) Representative: **Arnold & Siedsma**
**Bezuidenhoutseweg 57**
**2594 AC The Hague (NL)**

(54) **HYBRID CERAMIC POLYMER MEMBRANE FOR WATER ELECTROLYSIS APPLICATION**

(57)    The present invention relates to a method of manufacturing hybrid ceramic membrane, compromising the steps of providing a ceramic support membrane materials comprising YSZ and $TiO_2$ flakes via slip-casting, followed by thermal curing and sintering steps, coating the prepared support structure with a thin layer of $TiO_2$ to vary the pore size distribution of the support structure and further densification by using ion selective polymers to reduce gas crossover while maintaining a high enough conductivity.

**EP 4 296 406 A1**

**Description**

**Technical field**

The present invention is related to a hybrid ceramic membrane and to a method of manufacturing said membrane. In particular, the membrane compromises a porous ceramic support, coated with a nanoparticle layer and pore-filled with ion conductive polymer for application in alkaline water electrolysis application.

**Background art**

It is known that ceramic membranes are applied in various applications, such as liquid filtration, gas separation and energy devices due to their good mechanical strength and stability against chemicals attack. They can withstand harsh conditions, such as high pH, low pH, high temperatures and high pressure, among others. Porous polymeric membranes, on the other hand, cannot withstand such harsh conditions despite their ease of processing and preparation.

Hydrogen is used in almost every industry, including stationary and transportation markets as an energy carrier, petroleum refining, and fertilizer pr oduction. Currently, it is primarily derived from fossil fuels, mainly natural gas and heavy oils and naphtha, via steam hydrocarbon (e.g., methane) reforming, in which, a hydrocarbon (e.g., methane) reacts with steam in the presence of a catalyst to produce hydrogen and carbon dioxide ($CO_2$). This raises environmental concerns as the $CO_2$ emitted is a major contributor to global climate change.

Another approach to produce hydrogen gas is from water using renewable energy sources, which has become of particular interest and is considered to be the most promising technique because it emits only water and oxygen as byproducts, without $CO_2$ emissions. The hydrogen produced in this way is called green hydrogen since water is just splitting into oxygen and hydrogen under the influence of electricity.

In alkaline water electrolysis, in which aqueous KOH or NaOH is used as electrolyte, water is first reduced to hydroxide ion ($OH^-$) and hydrogen gas ($2H_2O + 2e^- \rightarrow H_2 + 2OH^-$) at the cathode electrode. The produced $OH^-$ ion is then transported to the anode electrode through the membrane and discharged to O2 and water

$$\left(2OH^- \rightarrow H_2O + \frac{1}{2}O_2 + 2e^-\right).$$

The two electrodes are separated by a membrane. The main function of the membrane is to provide $OH^-$ ion conduction and avoid product gases crossover. It also prevents electrolyte mixing and short-circuiting.

Today, commercially available Zirfon™ Perl UTP 500 (Agfa-Gevaert N.V.), a 500 $\mu$m thick porous composite material made up of zirconium dioxide ($ZrO_2$) and polysulfone, is the most commonly used membrane in alkaline water electrolysis (10.1149/1945-7111/abda57).

When such porous membranes are employed, $H_2$ gas could diffusive into the $O_2$ stream and cause explosion when the $H_2$ concentration reaches the lower explosion limit (4%). Additionally, according to the manufacturer's datasheet, Zirfon™ Perl UTP 500 maximum operating temperature is only 110 °C.

Therefore, a scalable method to prepare self-standing mechanically robust hybrid ceramic membrane with controlled pore size remains elusive.

On the other hand, despite the recent progress on the development of anion exchange membranes (AEMs), a durable and optimized AEM for an alkaline water electrolysis cell is yet to be developed (https://doi.org/10.1115/1.4047963).

It is known that porous ceramic membranes compromises a thick layer of porous support, which provides mechanical strength and one or more thin selective inorganic (and/or polymeric) layer. It is usually prepared using, or combinations of, metal oxides, mainly $Al_2O_3$, $TiO_2$, $SiO_2$ or $ZrO_2$ powders, among others.

Campbell (US 2019/0389778 A1) discloses a method for preparing 3D porous ceramic materials for carbon dioxide capture system. The pores are reported to connect through the ceramic structure from one side of the ceramic structure to the opposite side of the material.

These membranes exhibit excellent mechanical and chemical stability properties.

However, it is necessary to further densify (narrow their pore size) the membranes for use in alkaline water electrolysis. One way to do that is to fill/densify the pores of the ceramic membrane by coating the membrane with a nanoparticle layer.

Growing polymer brushes on ceramic materials is another interesting approach that has been recently utilized to functionalize and densify porous ceramic membranes for nanofiltration membrane processes (PCT patent publication WO2020016068)..

Thus, it would be desirable to develop a durable hybrid ceramic membrane with high chemical and thermal stabilities and no/low ($H_2$) gas crossover for an alkaline water electrolysis and/or related systems by first fabricating a porous ceramic membrane and further densification via nanoparticle and ion-conducting polymer materials.

**Summary of invention**

According to a first aspect of the invention, there is therefore provided a method of preparing a hybrid ceramic membrane, hereinafter also referred to as a porous composite ceramic material, as set out in the appended claims.

Said method of manufacturing such porous composite ceramic material as defined in the appended set of claims, comprises:

- combining $TiO_2$ nanoparticles, at least another metal oxide nanoparticle and a curable polymer resin to create a mixture;
- curing the mixture to obtain a first composite material;
- heating the first composite material to a first temperature for removing the polymer from said first composite material to obtain a second composite material;
- heating the second composite material to a second temperature for sintering the $TiO_2$ nanoparticles, and the at least another metal oxide nanoparticles, thereby creating a first porous composite ceramic material; and
- coating said first porous composite ceramic material with a $TiO_2$ suspension to obtain a porous composite ceramic material as defined in any one of the appended set of claims.

In an embodiment according to the method of the invention, the at least another metal oxide nanoparticle is selected from alumina ($Al_2O_3$ ), yttria fully stabilized zirconia ($Y2O_3$ -doped $ZrO_2$ (YSZ)), yttria (tetragonal zirconia polycrystal ($Y2O_3$ -doped ZrO2 (Y-TZP)), CeO2, $CeO_2$ tetragonal $ZrO_2$ polycrystal (Ce-TZP), $ZrO_2$ , $SiO_2$ , $SnO_2$ , and the like; in particular the at least another metal oxide nanoparticle metal oxide nanoparticles is yttrium-doped zirconium oxide (YSZ).

In an embodiment of the method according to the invention, the mixture of $TiO_2$ nanoparticles, at least another metal oxide nanoparticle and a curable polymer resin, comprises $TiO_2$ nanoparticles in a range of about 1 wt% to about 20 wt% of the total mixture; in particular in a range of about 5 wt% to about 15 wt% of the total mixture.

In an embodiment of the method according to the invention, the mixture of $TiO_2$ nanoparticles, at least another metal oxide nanoparticle and a curable polymer resin, comprises at least another metal oxide nanoparticle in a range of about 50 wt% to about 80 wt% of the total mixture; in particular in a range of about 60 wt% to about 70 wt% of the total mixture.

In an embodiment of the method according to the invention, the $TiO_2$ suspension comprises $TiO_2$ in a range of about 1 wt% to about 5 wt%.

In an embodiment of the method according to the invention, the first porous composite ceramic material is coated with $TiO_2$ via a dip-coating.

In the method of manufacturing a porous composite ceramic material as defined in the appended set of claims, the porous composite ceramic material is further functionalized with polymer filling in the pores of the porous composite ceramic material.

As mentioned herein before, in the method of the invention, the polymer filling of the pores can be via polymer impregnation or an in situ polymerization of the pore walls. The in situ polymerization could for example consist of a surface-initiated atom-transfer radical polymerization (SI-ATRP) reaction; in particular using a .monomer such as (but not limited to) acrylate and styrene derivatives. Polymer impregnation van be done using any suitable polymer, such as polysulfone (PSU) and poly (p-phenylene oxide) (PPO), an anion-binding polymer, an ionomer or combinations thereof

In said embodiments wherein the polymer impregnation is done using an ionomer, said ionomer is in particular selected from a halogen ionomer, such as a fluorinated ionomer containing sulfonate groups based on ionized sulfonic acid (e.g., fluorosulfonic acid (i.e., FSA) ionomer), or a hydrocarbon ionomer preferably containing (meth)acrylate groups based on ionized (meth)acrylic acid; or combinations thereof.

In a particular embodiment the present invention provides a method for manufacturing of bipolar membranes, using the porous composite ceramic material herein provided, but characterized in that:

- half the pores of the porous composite ceramic material are filled from one side with a first ionomer via diffusion of a solution of said ionomer from that side followed by precipitation of said ionomer, and
- the other half of the pores of the porous composite ceramic material are filled from the other side with a second ionomer via diffusion of a solution of said ionomer from that second side followed by precipitation of said ionomer.

According to a second aspect the present invention provides a porous composite ceramic material comprising:

    a. $TiO_2$ nanoparticles, and at least another metal oxide nanoparticle,
    b. a coating layer of $TiO_2$ nanoparticles, and
    c. a polymer filling in the pores of the porous composite ceramic material.

In an embodiment of the porous composite ceramic material according to the invention, the at least another metal oxide nanoparticle is selected from alumina ($Al_2O_3$), yttria fully stabilized zirconia ($Y_2O_3$-doped $ZrO_2$ (YSZ)), yttria (tetragonal zirconia polycrystal ($Y_2O_3$-doped $ZrO_2$ (Y-TZP)), $CeO_2$, $CeO_2$ tetragonal $ZrO_2$ polycrystal (Ce-TZP), $ZrO_2$, $SiO_2$, $SnO_2$, and the like; in particular the at least another metal oxide nanoparticle metal oxide nanoparticles is yttrium-doped zirconium oxide (YSZ).

As evident from the manufacturing methods mentioned hereinbefore, in the preparation of the materials use is made of a mixture of polymer resin comprising the $TiO_2$ nanoparticles, and the at least another metal oxide nanoparticle. It is accordingly not surprising, that after curing and sintering some of the polymeric resin could reside in the obtained porous composite ceramic material. Thus in an embodiment of the porous composite ceramic material according to the invention it further comprises a polymer resin; in particular a cross-linkable polymer.

In an embodiment of the porous composite ceramic material according to the invention, the polymer resin is selected from an acrylate that can be cross-linked using a thermal initiator (e.g. a cross-linking agent) or an acrylate that may be cross-linked using an ultraviolet (UV) light-activated initiator, for example but not limited to, polyethylene glycol diacrylate (PEGDA) plus a thermal initiator (e.g., 3 wt % Luperox 331).

In an embodiment of the porous composite ceramic material according to the invention the porous composite ceramic material comprises $TiO_2$ nanoparticles in a range of about 1 wt% to about 20 wt% of the total porous composite ceramic material; in particular in a range of about 5 wt% to about 15 wt% of the total porous composite ceramic material.

In an embodiment of the porous composite ceramic material according to the invention the porous composite ceramic material comprises the at least another metal oxide nanoparticles in a range of about 50 wt% to about 80 wt% of the total porous composite ceramic material; in particular in a range of about 60 wt% to about 70 wt% of the total porous composite ceramic material.

In an embodiment of the porous composite ceramic material according to the invention the porous composite ceramic material has an average pore size in the range of about 80 to 200 nm.

In an embodiment of the porous composite ceramic material according to the invention said porous composite ceramic material is a membrane with a thickness between about 50 and 2000 $\mu$m; in particular between 50 and 1000 $\mu$m; more in particular between 50 and 200 $\mu$m.

In an embodiment of the porous composite ceramic material according to the invention the coating layer of $TiO_2$ nanoparticles has an average thickness between 0.5 and 5 $\mu$m and average pore size distribution between 50 and 150 nm.

In an embodiment of the porous composite ceramic material according to the invention the polymer filling in the pores of the porous composite ceramic material is done via polymer impregnation wherein the polymer is selected from any suitable polymer, such as polysulfone (PSU) and poly (p-phenylene oxide) (PPO), an anion-binding polymer, an ionomer or combinations thereof

In an embodiment of the porous composite ceramic material according to the invention the polymer filling in the pores of the porous composite ceramic material is done using an ionomer selected from a halogen ionomer, such as a fluorinated ionomer containing sulfonate groups based on ionized sulfonic acid (e.g., fluorosulfonic acid (i.e., FSA) ionomer), or a hydrocarbon ionomer preferably containing (meth)acrylate groups based on ionized (meth)acrylic acid; or combinations thereof.

In an embodiment of the porous composite ceramic material according to the invention the polymer filling in the pores of the porous composite ceramic material is done using in situ polymerization of the pore walls; in particular using a surface-initiated, atom-transfer radical polymerization (SI-ATRP) reaction; more in particular using SI-ATRP with a monomer such as (but not limited to) acrylate and styrene derivatives.

In a third aspect the present invention provides the use of the porous composite ceramic material as herein defined, or obtained according to the methods of the present invention, in filtration or electrochemical applications, such as a fuel-cell, hydrogen peroxide production and alkaline water electrolysis.

In a particular embodiment the porous ceramic support material is made of 3% mol. Yttria Stabilized Zirconia (referred to here as YSZ) and $TiO_2$ nanoparticles. Advantageously, the $TiO_2$ nanoparticle increases the mechanical stability of the membranes. Moreover, the dimensional shrinkage after the sintering has been improved.

In following steps, to this exemplary porous ceramic support material a thin layer coat of $TiO_2$ particles is deposited on top in order to vary the pore size and pore size distribution of the membrane. Advantageously, this fills the large pores, narrows the pore size distribution, and increases the prepared membrane's mechanical strength.

At last, the examples hereinafter, provide two possible modes for the further densification of the pores of a thus obtained $TiO_2$ coated porous ceramic support material using a polymer such as for example an anion exchange polymer, as pore filler; either (i) the support composite ceramic material is functionalized in order to accommodate polymerization starting from the pore walls, or (ii) a monomer solution of the targeted ion exchange polymer is diffused through the pores and then polymerization is initiated until the pores are completely filled.

In both cases, the ceramic material can be additionally (pre- or post-) functionalized to further accommodate $OH^-$ ion-conducting groups. Upon polymerization of the pores, the material will behave as a dense hybrid membrane (Meynen V. et al., Current Organic Chemistry, 18:18, 2014, 2334-2350) significantly reducing gas crossover, whilst keeping its ionic conductive property due to the properties of the AEM polymer/functionalized ceramic used (Christopher G. Arges and Le Zhang, ACS Appl. Energy Mater., 2018, 1, 7, 2991-3012).

Membranes with different degree of densification (and/or different pore size) can be obtained with method of the present invention.

**Brief description of the figures**

Various aspects of the invention will now be discussed in greater detail with reference to the appended drawings, with the same reference numerical illustrating the same attributes.

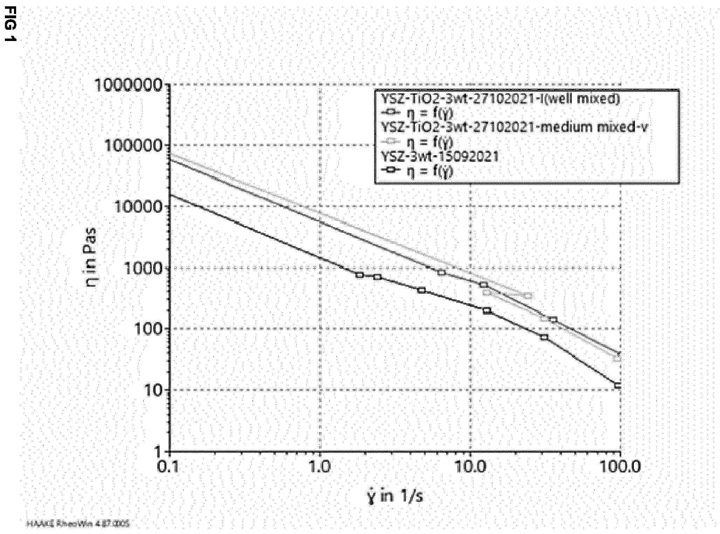

Figure 1 Viscosity of YSZ-TiO$_2$ slurry at 25 °C.
Figure 2 per cent of polymer removal after membrane sintering of the membrane according to the present invention.
Figure 3 shows the pore size distribution of the membranes according to the present invention.
Figure 4 shows the thermal stability of the membrane according to the present invention.
Figure 5 Preliminary alkaline water electrolysis test using the prepared membranes (700 um)
Figure 6 shows a flow diagram of the hybrid ceramic membrane preparation processes according to the present invention.

**Description of embodiments**

A list of abbreviations used in the description is provide below.

| | |
|---|---|
| AEM | Anion exchange membrane |
| CO$_2$ | Carbon dioxide |
| °C | degrees Celsius |
| DI | Deionized water |
| DMF | N, Ndimethylformamide |
| g | gram |
| He | Helium |
| Hg | Mercury |
| H | hour |
| H$_2$ | Hydrogen |
| H$_2$O | water |

| | |
|---|---|
| KOH | Potassium hydroxide |
| L331 | Luperox® 331M80, 1,1-Bis(*tert*-butylperoxy)cyclohexane solution |
| mg | milligram |
| mL | milliliter |
| min | minute |
| nm | nanometer |
| NMP | N-Methyl-2-pyrrolidone |
| OH$^-$ | Hydroxide ion |
| O$_2$ | Oxygen |
| PEGDA | Polyethylene glycol-diacrylate |
| PVA | Polyvinyl alcohol |
| rpm | Revolutions per minute |
| RO | Reverse osmosis |
| RT | Room temperature |
| SEM | Scanning electron microscope |
| SI-ATRP | Surface-initiated atom-transfer radical polymerization |
| S | second |
| TiO$_2$ | Titanium oxide |
| TGA | Thermogravimetric analysis |
| $\mu$m | micrometer |
| Wt.% | Weight percent |
| YSZ | 3% mol. Yttria stabilized zirconia |
| YSZ-TiO$_2$ | Membrane made up of YSZ and TiO$_2$ |

| YSZ-TiO$_2$_T | YSZ-TiO$_2$ membranes coated with TiO$_2$ nanoparticles |
| YSZ-TiO$_2$_T-ionomer | YSZ-TiO$_2$_T membranes modified with an ionomer |
| ZrO$_2$ | Zirconium oxide |

As mentioned hereinbefore, it is an object of the present invention to provide a material, in particular a hybrid ceramic membrane that compromises a porous ceramic support, coated with a TiO$_2$ nanoparticle layer and which pore-filled with ion conductive polymer for application in alkaline water electrolysis application. Using the combination of such a coating with TiO$_2$ nanoparticles, and a polymer filing of the pores, it has been found that for application in water electrolysis applications, gas cross-over can be prevented, and this without affecting anion conductivity.

To said extend the porous ceramic support comprises combining TiO$_2$ nanoparticles with at least another metal oxide nanoparticle, preferably yttrium-doped zirconium oxide (YSZ), and a curable polymer resin, preferable a curable cross-linkable polymer such as Poly(ethylene glycol) diacrylate (PEGDA).

In a first step of the manufacture of the materials according to the invention, such mixture of TiO$_2$ nanoparticles with at least another metal oxide nanoparticle and a curable polymer resin, is shaped for example using a mold, and cured trough initiation of the curable polymer resin, yielding a so named green body of the final product (See examples 1 and 2 below).

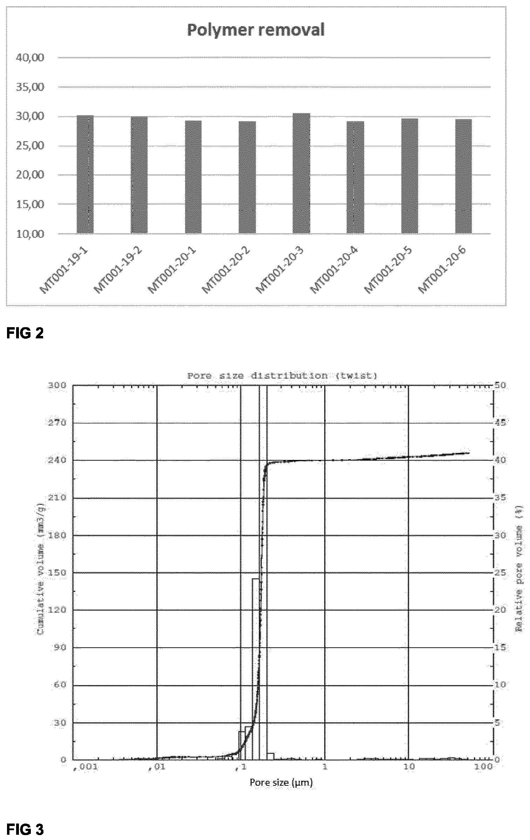

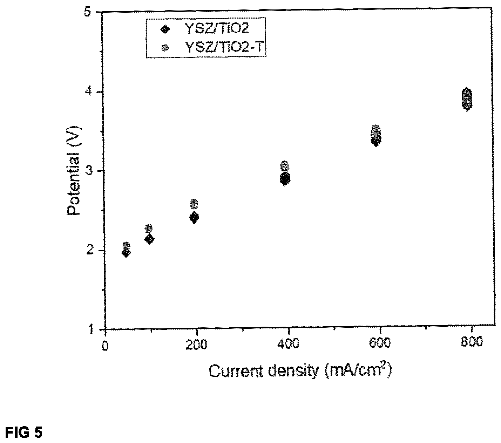

In a subsequent step the green body is sintered to compact and solidify the metal oxide and TiO$_2$ nanoparticles, with at least partial removal of the polymer resin, thus obtaining the base porous ceramic membrane (See example 3). Although the thus obtained material has a surprisingly narrow pore size distribution (See Figure 3), the average pore size of such materials does not enable an application in electrochemical cells, therefore a coating of TiO$_2$ nanoparticles is being applied (See Example 4). In an embodiment said coating comprises a first step exposing the base porous ceramic membrane to a composition comprising TiO$_2$ nanoparticles and a binder. In a second step the thus coated base porous ceramic membrane is dried and sintered to remove the binder and solidify the layer of TiO$_2$ nanoparticles onto the base porous ceramic membrane, thus obtaining the TiO$_2$-coated base porous ceramic membrane (See Example 4 and herein referred to as YSZ-TiO$_2$-T). Where such coating further reduced the average pore size, as evident from the increased area resistance (See Table 4) it hardly affected the Ionic conductivity, a key parameter in electrochemical applications as can be seen in Figure 5.

A further densification of the pores is done using a polymer. Per reference to the examples below, this can be done using suitable techniques such as ionomer impregnation or an in situ polymerization reaction.

In a particular embodiment the densification of the coated ceramic membranes (YSZ-TiO$_2$-T) with ionomer is done via ionomer impregnation (Example 5) or via an in situ polymerization of the pore walls, said method comprising (i) Grafting of the walls with a surface linker, (ii) grafting of the initiator molecule onto the surface linker and (iii) performing the SI-ATRP polymerization using various monomers to form the desired polymeric layer. In situ polymerization of the pore walls could for example include the preparation of an alkaline stable monomer, i.e. 1-(4-ethenylphenyl)-2-phenyl-1H-benzimidazole, grafting the coated ceramic membranes (YSZ-TiO$_2$-T) with the surface linker aminopropyl phosphonic acid modification (First step , grafting the initiator molecule α-bromoisobutyryl bromide onto the surface linker) and polymerization with the alkaline stable monomer.

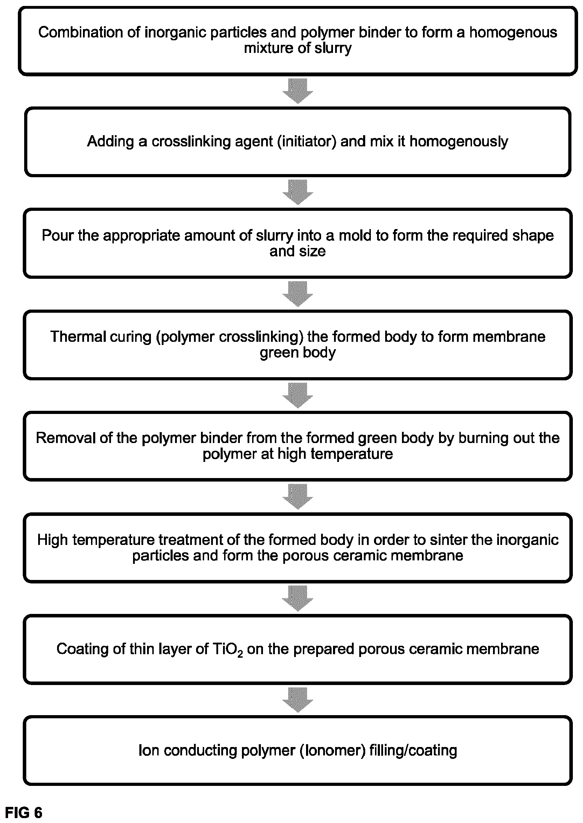

The overall process is schematically summarized in Figure 6.

## Numbered embodiments of the invention

1. A porous composite ceramic material comprising:

- TiO$_2$ nanoparticles, and at least another metal oxide nanoparticle,
- a coating layer of TiO$_2$ nanoparticles, and
- a polymer filling in the pores of the porous composite ceramic material.

2. The porous composite ceramic membrane of embodiment 1, wherein the at least another metal oxide nanoparticle is selected from alumina (Al2O3), yttria fully stabilized zirconia (Y2O3-doped ZrO2 (YSZ)), yttria (tetragonal zirconia polycrystal (Y2O3-doped ZrO2 (Y-TZP)), CeO2, CeO2 tetragonal ZrO2 polycrystal (Ce-TZP), ZrO2 , SiO2 , SnO2 , and the like; in particular the at least another metal oxide nanoparticle metal oxide nanoparticles is yttrium-doped zirconium oxide (YSZ).

3. The porous composite ceramic material of embodiments 1 or 2, further comprising a polymer resin; in particular a cross-linkable polymer.

4. The porous composite ceramic material of embodiment 3, wherein the polymer resin is selected from an acrylate that can be cross-linked using a thermal initiator (e.g. a cross-linking agent) or an acrylate that may be cross-linked using an ultraviolet (UV) light-activated initiator, for example but not limited to, polyethylene glycol diacrylate (PEGDA) plus a thermal initiator (e.g., 3 wt % Luperox 331).

5. The porous composite ceramic material according to any one of the preceding embodiments, wherein the porous composite ceramic material comprises TiO2 nanoparticles in a range of about 1 wt% to about 20 wt% of the total porous composite ceramic material; in particular in a range of about 5 wt% to about 15 wt% of the total porous composite ceramic material.

6. The porous composite ceramic material according to any one of the preceding embodiments, wherein the porous composite ceramic material comprises the at least another metal oxide nanoparticles in a range of about 50 wt% to about 80 wt% of the total porous composite ceramic material; in particular in a range of about 60 wt% to about 70 wt% of the total porous composite ceramic material.

7. The porous composite ceramic material according to any one of the preceding embodiments, wherein the porous composite ceramic material has an average pore size in the range of about 80 to 200 nm.

8. The porous composite ceramic material according to any one of the preceding embodiments, wherein said porous composite ceramic material is a membrane with a thickness between about 50 and 2000 $\mu$m; in particular between 50 and 1000 $\mu$m; more in particular between 50 and 200 $\mu$m.

9. The porous composite ceramic material according to any one of the preceding embodiments, wherein the coating layer of TiO2 nanoparticles has an average thickness between 0.5 and 5 $\mu$m and average pore size distribution between 50 and 150 nm.

10. The porous composite ceramic material according to any one of embodiments 1 to 9 wherein the polymer filling in the pores of the porous composite ceramic material is done via polymer impregnation.

11. The porous composite ceramic material according to embodiment 10, wherein the polymer is selected from any suitable polymer, such as polysulfone (PSU) and polypropylene oxide (PPO), an anion-binding polymer, an ionomer or combinations thereof

12. The porous composite ceramic material according to embodiment 11, wherein the ionomer is selected from a halogen ionomer, such as a fluorinated ionomer containing sulfonate groups based on ionized sulfonic acid (e.g., fluorosulfonic acid (i.e., FSA) ionomer), or a hydrocarbon ionomer preferably containing (meth)acrylate groups based on ionized (meth)acrylic acid; or combinations thereof.

13. The porous composite ceramic material according to any one of embodiments 1 to 9 wherein the polymer filling in the pores of the porous composite ceramic material is done via in situ polymerization of the pore walls.

14. The porous composite ceramic material according to embodiment 12, wherein the in situ polymerization consists of a surface-initiated, atom-transfer radical polymerization (SI-ATRP) reaction; in particular using a .monomer such as (but not limited to) acrylate and styrene derivatives.

15. Method of manufacturing a porous composite ceramic material as defined in any one of embodiments 1 to 13, comprising:

- combining TiO2 nanoparticles, at least another metal oxide nanoparticle and a curable polymer resin to create a mixture;
- curing the mixture to obtain a first composite material;
- heating the first composite material to a first temperature for removing the polymer from said first composite material to obtain a second composite material;
- heating the second composite material to a second temperature for sintering the TiO2 nanoparticles, and the at least another metal oxide nanoparticles, thereby creating a first porous composite ceramic material; and
- coating said first porous composite ceramic material with a TiO2 suspension to obtain a porous composite ceramic material as defined in any one of claims 1 to 14.

16. The method of embodiment 15, wherein the at least another metal oxide nanoparticle is selected from alumina (Al2O3 ), yttria fully stabilized zirconia (Y2O3 -doped ZrO2 (YSZ)), yttria (tetragonal zirconia polycrystal (Y2O3 -doped ZrO2 (Y-TZP)), CeO2, CeO2 tetragonal ZrO2 polycrystal (Ce-TZP), SiO2 , SnO2 , and the like; in particular the at least another metal oxide nanoparticle metal oxide nanoparticles is yttrium-doped zirconium oxide (YSZ).

17. The method of embodiment 15, wherein the polymer resin is selected from an acrylate that can be cross-linked using a thermal initiator (e.g. a cross-linking agent) or an acrylate that may be cross-linked using an ultraviolet (UV) light-activated initiator, for example but not limited to, polyethylene glycol diacrylate (PEGDA) plus a thermal initiator (e.g., 3 wt % Luperox 331).

18. The method of embodiment 15, wherein the mixture comprises TiO2 nanoparticles in a range of about 1 wt% to about 20 wt% of the total mixture of TiO2 nanoparticles, at least another metal oxide nanoparticle and a curable polymer resin; in particular in a range of about 5 wt% to about 15 wt% of the total mixture.

19. The method of embodiment 15, wherein the mixture comprises at least another metal oxide nanoparticle in a range of about 50 wt% to about 80 wt% of the total mixture of TiO2 nanoparticles, at least another metal oxide nanoparticle and a curable polymer resin; in particular in a range of about 60 wt% to about 70 wt% of the total mixture.

20. The method of embodiment 15, wherein the TiO2 suspension comprises TiO2 in a range of about 1 wt% to about 5 wt%.

21. The method of embodiment 15, wherein the first porous composite ceramic material is coated with TiO2 via a dip-coating.

22. The method of any one of embodiments 15 to 21, wherein the porous composite ceramic material is further functionalized with a pore filling layer of polymer brushes formed via in situ polymerization of the pore walls

23. The method of embodiment 22, wherein the in situ polymerization consists of a surface-initiated atom-transfer radical polymerization (SI-ATRP) reaction; in particular using a .monomer such as (but not limited to) acrylate and styrene derivatives.

24. The method of any one of embodiments 15 to 21, wherein the pores of the porous composite ceramic material are filled with a polymer via polymer impregnation.

25. The method of embodiment 24, wherein the polymer is selected from any suitable polymer, such as polysulfone (PSU) and polypropylene oxide (PPO), an anion-binding polymer, an ionomer or combinations thereof

26. The method of embodiment 25, wherein the ionomer is selected from a halogen ionomer, such as a fluorinated ionomer containing sulfonate groups based on ionized sulfonic acid (e.g., fluorosulfonic acid (i.e., FSA) ionomer), or a hydrocarbon ionomer preferably containing (meth)acrylate groups based on ionized (meth)acrylic acid; or combinations thereof.

27. The method of any one of embodiments 24 to 26, wherein:

- half the pores of the porous composite ceramic material are filled from one side with a first ionomer via diffusion of a solution of said ionomer from that side followed by precipitation of said ionomer, and
- the other half of the pores of the porous composite ceramic material are filled from the other side with a second ionomer via diffusion of a solution of said ionomer from that second side followed by precipitation of said ionomer.

28. Use of the porous composite ceramic material according to any one of embodiments 1 to 14, or obtained according to the methods of any one of embodiments 15 to 27 in filtration or electrochemical applications, such as a fuel-cell, hydrogen peroxide production and alkaline water electrolysis.

**Examples**

**Example 1. Preparation of inorganic particles-polymer slurry**

In a thinky mixer (ARE-250 CE) slurry container, 5.4 g Poly(ethylene glycol) diacrylate (PEGDA, 27 wt.%, Sigma-Aldrich, average $M_n$ 575) was added, followed by 6 g of YSZ (TOSOH EUROPE B.V.). This was mixed for 2 mins at 2000 rpm. The remaining YSZ (6 g) was added and mixed for 2 mins at 2000 rpm. Similarly, 10 wt.% $TiO_2$ nanoparticles (2 g) was added and mixed for 2 mins at 2000 rpm. The slurry container was cooled down to room temperature before the next step. Finally, 3 wt.% L331 initiator (Arkema) with respect to the total mixture (0.67 mL) was added and mixed for 2 mins at 2000 rpm, followed by defoaming step, mixing at 900 rpm for 1 min. In parallel, slurry without $TiO_2$ nano-particles, in which 70 wt.% of YSZ used was prepared for comparison of YSZ-based membrane properties with and without $TiO_2$.

**Example 2. Preparation of membrane green body**

Teflon mold (500 $\mu$m) with different dimensions (e.g., 3 cm, 5 cm diameters and 5.3 x 3.3 $cm^2$ rectangular) were prepared and placed on top of a glass support. The homogenous slurry was filled in a syringe container and pressed and poured into the Teflon mold placed on top of a glass support. The slurry was then pressed and uniformly distributed to fill the chamber using a second glass cover. Four clamps were used to clamped at the ends of the glass cover and support. The sample was then shaken for 2 h at 85 per minute using lab shake. It was then thermally cured at 100 °C during overnight in an oven. A self-standing polymer/nanoparticles material (known as membrane green body) was collected from the mold.

**Example 3. Preparation of porous ceramic membrane,**

Briefly, the polymer template was removed from the membrane green body by heating the sample at 180 °C for 2 h, 250 °C for 4 h and 400 °C for 2 h in a box furnace under air. Heating rate of 60 °C/h was used. Subsequently, the ceramic nanoparticles were heated from 400 °C to 800 °C at a heating rate of 120 °C/h and held for a dwell time of 4 h. The temperature was then increased to 1100 °C for 15 h and decreased to 80 °C at a heating and cooling rate of 120 °C/h. The porous ceramic membranes, prepared in this way, with and without $TiO_2$ nanoparticles are named YSZ-$TiO_2$ and YSZ, respectively. Table 1 presents the composition of the porous ceramic membranes.

Composition of the prepared porous ceramic membranes

Table 1. Membrane composition (nanoparticles, polymer binder and initiator)

| Membrane | YSZ (wt.%) | $TiO_2$ (wt.%) | PEGDA (wt.%) | L331 (wt.%) |
|---|---|---|---|---|
| YSZ | 70 | 0 | 27 | 3 |
| YSZ-$TiO_2$ | 60 | 10 | 27 | 3 |
| *wt.% is calculated considering the total weight of the slurry. | | | | |

**Example 4. Preparation of $TiO_2$ suspension and coating of the YSZ-$TiO_2$ membranes to yield the YSZ-TiO2-T membranes**

Commercially available $TiO_2$ powders (~100 nm in size, anatase phase, 99.9 %, US Research Nanomaterials, Inc, America) and Poly(vinyl alcohol) (PVA 72000, Fluka Chemica) were employed as the starting powders and binder, respectively, to make the $TiO_2$ suspension. The determined amount of $TiO_2$ powder particles was dispersed into DI water and ultrasonicated for 15 min. Table 2 presents the composition of the prepared $TiO_2$ suspension. The obtained suspension was then stirred for 2 h. Following that, 1 wt.% PVA was added into the suspension as a binder. The suspension was then continuously stirred for 24 h before being degassed in vacuum ambiance to remove air bubbles.

Table 2 Composition of the prepared $TiO_2$ suspension.

| $TiO_2$ (wt.%) | PVA (wt.%) | DI water (wt.%) |
|---|---|---|
| 3 | 1 | 96 |

Dip-coating (RDS15 Dip Coater machine) with a 30 s dipping time and a 5 mm/s withdrawal speed was used to coat the prepared $TiO_2$ suspension on the surface of the prepared ceramic membrane. The modified membranes were then dried at room temperature for 48 h. After that, the membranes were heated to 500 °C for 3 h to remove the PVA binder, then continuously heated to 800 °C for 4 hours under air to achieve sintering temperature. The heating and cooling rates were each set to 1 °C/min.

**Example 5. Membrane densification via ionomer impregnation, Yielding the YSZ-TiO2-T ionomer membranes**

The impregnation of commercial ionomer into the pristine or modified porous ceramic membrane is done as follows: The AP2-HNN8-00-X (Aemion+™, high ion exchange capacity anion exchange polymer dry resin) is dissolved in NMP or Methanol (5 to 20 wt./v%). The ceramic membranes are immersed in the prepared solution for 24 h. The membranes were taken out and surface-cleaned using tissue paper wetted with NMP or Methanol to remove the surface polymer resins. The membranes were then immersed in DI water for 24 h. The membranes were then dried at 50 °C oven for 24 h before further characterizations.

**Example 6: Membrane characterizations**

The following characterizations were performed on both the modified and the unmodified membranes.

The prepared porous ceramic membranes were characterized in terms of thickness, diameter before and after sintering. The final porous ceramic membranes were characterized in term of ionic conductivity, density, porosity, pore size, thermal stability.

The performance of the prepared porous ceramic membranes were also tested in alkaline water electrolysis using the following conditions.

| Parameter | Value/type |
|---|---|
| Catholyte | 1 M KOH |
| Anolyte | 1 M KOH |
| Current collector | Optimized plate |

(continued)

| Parameter | Value/type |
|---|---|
| Temperature | 25, 40 and 60 °C |
| Scan rate | 10 mV/s |
| Cell pressure | 4 bar |
| Flow | 200 ml/min |

Figure 2 shows the polymer weight per cent removal of different batches of the membranes removal after sintering. For this, the weights of the membranes before and after sintering were recorded. The decrease indicates the amount and successful removal of polymer from the material, shown to be consistent amongst the different batches.

Table 3 - Physical properties (pore size, pore size distribution and porosity) of the prepared membrane determined via Hg porosimetry measurement. The bulk and apparent densities of the membranes were determined via He pycnometer.

| | Unit | YSZ-TiO$_2$ | YSZ-TiO$_2$_T | YSZ-TiO$_2$_T-ionomer |
|---|---|---|---|---|
| Total pore area | m$^2$/g | 3.9 | 3.6 | 6.4 |
| Total cumulative volume | mm$^3$/g | 244 | 239 | 248.5 |
| Average pore size | nm | 172 | 169 | 126 |
| Bulk density | g/cm$^3$ | 2.6 | 2.5 | 2.3 |
| Apparent density | g/cm$^3$ | 7.1 | 6.0 | 5.2 |
| Porosity | % | 63 | 59 | 56.5 |
| Thickness | $\mu$m | 600-700 | 600-700 | 600-700 |

Figure 3 shows the pore size distribution of YSZ-TiO$_2$ membrane. The YSZ-TiO2 membrane exhibits a surprisingly narrow pore size distribution with an average pore size of 172 nm. Values range of about 90 nm to about 200 nm. The cumulative pore volume is up to about 240 mm$^3$/g.

**Table 4 - Ionic conductivity of YSZ-TiO$_2$, YSZ-TiO$_2$_T and YSZ-TiO2-T-ionomer membranes**

| Membrane | Area resistance ($\Omega$. cm$^2$) | Ionic conductivity (mS/cm) at 6 M KOH, 30 °C |
|---|---|---|
| YSZ-TiO$_2$ | 0.175 ± 0.013 | 368 ± 25 |
| YSZ-TiO2-T | 0.207 ± 0.055 | 361 ± 19 |
| YSZ-TiO2-T-ionomer | 0.36 ± 0.05 | 216 ± 12 |
| • Ionic conductivity of 6 M KOH at 30 °C is 688 mS/cm. | | |

**Alkaline stability of prepared membranes in 6 M KOH at 60 °C for 14 days**

| Membrane | Wt.(%) loss | Ionic conductivity loss |
|---|---|---|
| YSZ-TiO$_2$ | ND | ND |
| YSZ-TiO2-T | ND | ND |
| YSZ-TiO2-T-ionomer | ND | ND |
| **ND: Not detected. Membranes are stable under these conditions** | | |

**Gas permeability through YSZ-TiO$_2$ YSZ-TiO$_2$ T and YSZ-TiO2-T-ionomer membranes**

| Membrane | Gas Flux (L/min.cm2) at 5 bar |
|---|---|
| YSZ-TiO$_2$ | 4.28 + 0.87 |
| YSZ-TiO2-T | 3.95 + 0.38 |
| YSZ-TiO2-T -ionomer | 2.20 + 0.24 |

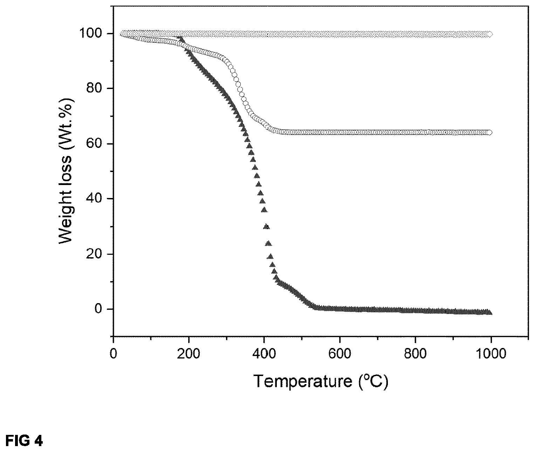

Figure 4 shows the Thermogravimetric analysis (TGA) of the PEGDA (Lower line), cured (Middle line) and sintered (Upper line) of the YSZ-TiO$_2$ membrane. The sintered material is stable within the tested temperature range.

Figure 5 presents preliminary alkaline water electrolysis employing the membranes according to the invention and showing the consistent correlation between Potential (V) and current Density for the base porous ceramic membrane (YSZ-TiO$_2$), and the TiO$_2$-coated base porous ceramic membrane (YSZ-TiO2-T).

**Claims**

1. A porous composite ceramic material comprising:

   • TiO$_2$ nanoparticles, and at least another metal oxide nanoparticle,
   • a coating layer of TiO$_2$ nanoparticles, and
   • a polymer filling in the pores of the porous composite ceramic material.

2. The porous composite ceramic membrane of claim 1, wherein the at least another metal oxide nanoparticle is selected from alumina (Al$_2$O$_3$), yttria fully stabilized zirconia (Y$_2$O$_3$-doped ZrO$_2$ (YSZ)), yttria (tetragonal zirconia polycrystal (Y$_2$O$_3$-doped ZrO$_2$ (Y-TZP)), CeO$_2$, CeO$_2$ tetragonal ZrO$_2$ polycrystal (Ce-TZP), ZrO$_2$, SiO$_2$ , SnO$_2$ , and the like; in particular the at least another metal oxide nanoparticle metal oxide nanoparticles is yttrium-doped zirconium oxide (YSZ).

3. The porous composite ceramic material according to any one of the preceding claims, wherein the porous composite ceramic material comprises TiO2 nanoparticles in a range of about 1 wt% to about 20 wt% of the total porous composite ceramic material; in particular in a range of about 5 wt% to about 15 wt% of the total porous composite ceramic material.

4. The porous composite ceramic material according to any one of the preceding claims, wherein the porous composite ceramic material comprises the at least another metal oxide nanoparticles in a range of about 50 wt% to about 80 wt% of the total porous composite ceramic material; in particular in a range of about 60 wt% to about 70 wt% of the total porous composite ceramic material.

5. The porous composite ceramic material according to any one of the preceding claims, wherein the porous composite ceramic material has an average pore size in the range of about 80 to 200 nm.

6. The porous composite ceramic material according to any one of the preceding claims, wherein said porous composite ceramic material is a membrane with a thickness between about 50 and 2000 $\mu$m; in particular between 50 and 1000 $\mu$m; more in particular between 50 and 200 $\mu$m.

7. The porous composite ceramic material according to any one of the preceding claims, wherein the coating layer of TiO$_2$ nanoparticles has an average thickness between 0.5 and 5 $\mu$m and average pore size distribution between 50 and 150 nm.

8. The porous composite ceramic material according to any one of claims 1 to 7 wherein the polymer filling in the pores of the porous composite ceramic material is done via polymer impregnation.

9. The porous composite ceramic material according to claim 8, wherein the polymer is selected from any suitable polymer, such as polysulfone (PSU) and polypropylene oxide (PPO), an anion-binding polymer, an ionomer or combinations thereof

10. The porous composite ceramic material according to claim 9, wherein the ionomer is selected from a halogen ionomer, such as a fluorinated ionomer containing sulfonate groups based on ionized sulfonic acid (e.g., fluorosulfonic acid (i.e., FSA) ionomer), or a hydrocarbon ionomer preferably containing (meth)acrylate groups based on ionized (meth)acrylic acid; or combinations thereof.

11. Method of manufacturing a porous composite ceramic material as defined in any one of claims 1 to 10, comprising:

    • combining TiO2 nanoparticles, at least another metal oxide nanoparticle and a curable polymer resin to create a mixture;
    • curing the mixture to obtain a first composite material;
    • heating the first composite material to a first temperature for removing the polymer from said first composite material to obtain a second composite material;
    • heating the second composite material to a second temperature for sintering the $TiO_2$ nanoparticles, and the at least another metal oxide nanoparticles, thereby creating a first porous composite ceramic material; and
    • coating said first porous composite ceramic material with a $TiO_2$ suspension to obtain a porous composite ceramic material as defined in any one of claims 1 to 14.

12. The method of claim 11, wherein the at least another metal oxide nanoparticle is selected from alumina ($Al_2O_3$), yttria fully stabilized zirconia ($Y_2O_3$-doped $ZrO_2$ (YSZ)), yttria (tetragonal zirconia polycrystal ($Y_2O_3$-doped $ZrO_2$(Y-TZP)), $CeO_2$, $CeO_2$ tetragonal $ZrO_2$polycrystal (Ce-TZP), $ZrO_2$, $SiO_2$, $SnO_2$, and the like; in particular the at least another metal oxide nanoparticle metal oxide nanoparticles is yttrium-doped zirconium oxide (YSZ).

13. The method of claim 11, wherein the polymer resin is selected from an acrylate that can be cross-linked using a thermal initiator (e.g. a cross-linking agent) or an acrylate that may be cross-linked using an ultraviolet (UV) light-activated initiator, for example but not limited to, polyethylene glycol diacrylate (PEGDA) plus a thermal initiator (e.g., 3 wt % Luperox 331).

14. The method of claim 11, wherein the mixture comprises $TiO_2$ nanoparticles in a range of about 1 wt% to about 20 wt% of the total mixture of $TiO_2$ nanoparticles, at least another metal oxide nanoparticle and a curable polymer resin; in particular in a range of about 5 wt% to about 15 wt% of the total mixture.

15. The method of claim 11, wherein the mixture comprises at least another metal oxide nanoparticle in a range of about 50 wt% to about 80 wt% of the total mixture of $TiO_2$ nanoparticles, at least another metal oxide nanoparticle and a curable polymer resin; in particular in a range of about 60 wt% to about 70 wt% of the total mixture.

16. The method of claim 11, wherein the $TiO_2$ suspension comprises $TiO_2$ in a range of about 1 wt% to about 5 wt%.

17. The method of any one of claims 11 to 16, wherein:

    • half the pores of the porous composite ceramic material are filled from one side with a first ionomer via diffusion of a solution of said ionomer from that side followed by precipitation of said ionomer, and
    • the other half of the pores of the porous composite ceramic material are filled from the other side with a second ionomer via diffusion of a solution of said ionomer from that second side followed by precipitation of said ionomer.

18. Use of the porous composite ceramic material according to any one of claims 1 to 10, or obtained according to the methods of any one of claims 11 to 17 in filtration or electrochemical applications, such as a fuel-cell, hydrogen peroxide production and alkaline water electrolysis.

**FIG 1**

EP 4 296 406 A1

**FIG 2**

**FIG 3**

**FIG 4**

FIG 5

Combination of inorganic particles and polymer binder to form a homogenous mixture of slurry

Adding a crosslinking agent (initiator) and mix it homogenously

Pour the appropriate amount of slurry into a mold to form the required shape and size

Thermal curing (polymer crosslinking) the formed body to form membrane green body

Removal of the polymer binder from the formed green body by burning out the polymer at high temperature

High temperature treatment of the formed body in order to sinter the inorganic particles and form the porous ceramic membrane

Coating of thin layer of $TiO_2$ on the prepared porous ceramic membrane

Ion conducting polymer (Ionomer) filling/coating

**FIG 6**

Europäisches
Patentamt

European
Patent Office

Office européen
des brevets

# EUROPEAN SEARCH REPORT

Application Number

EP 22 18 0414

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 101 971 269 B1 (KOLON FASHION MATERIAL INC [KR]) 22 April 2019 (2019-04-22) | 1,7-10, 18 | INV. C25B13/02 C25B13/07 C25B13/08 |
| Y | * abstract; claims 1, 8, 10, 29 * | 2-6, 11-18 | |
| Y | EP 2 017 240 A1 (MITSUI MINING & SMELTING CO [JP]) 21 January 2009 (2009-01-21) * paragraph [0122] * | 11-18 | |
| Y,D | US 2019/389778 A1 (CAMPBELL PATRICK [US] ET AL) 26 December 2019 (2019-12-26) * claims 1-4, 11-16, 20 * | 11-18 | |
| Y | US 2020/102663 A1 (XU HUI [US] ET AL) 2 April 2020 (2020-04-02) * paragraph [0063]; claims 1-9, 20, 21, 22 * * paragraph [0102] * | 2-6,12, 14-16,18 | |
| A | JP H07 126410 A (ASAHI CHEMICAL IND) 16 May 1995 (1995-05-16) * abstract * * paragraphs [0009], [0010] * | 1-18 | TECHNICAL FIELDS SEARCHED (IPC) |
| A | KR 2022 0081811 A (KOREA INST ENERGY RES [KR]) 16 June 2022 (2022-06-16) * abstract; claims 1-6 * | 1-18 | C25B H01M B01D C04B |
| A | EP 0 900 249 B1 (GORE & ASS [US]) 22 October 2003 (2003-10-22) * paragraph [0051]; claims 1, 10, 12, 15 * | 1-18 | |
| A | WO 2006/036957 A2 (GINER ELECTROCHEMICAL SYSTEMS [US]; LIU HAN [US] ET AL.) 6 April 2006 (2006-04-06) * page 13, lines 7-31; figure 1 * | 1-18 | |

The present search report has been drawn up for all claims

| Place of search | Date of completion of the search | Examiner |
|---|---|---|
| Munich | 8 February 2023 | Desbois, Valérie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 18 0414

This annex lists the patent family members relating to the patent documents cited in the above-mentioned European search report.
The members are as contained in the European Patent Office EDP file on
The European Patent Office is in no way liable for these particulars which are merely given for the purpose of information.

08-02-2023

| Patent document cited in search report | | | Publication date | Patent family member(s) | | | Publication date |
|---|---|---|---|---|---|---|---|
| KR 101971269 | B1 | | 22-04-2019 | NONE | | | |
| EP 2017240 | A1 | | 21-01-2009 | AU | 2003261859 | A1 | 19-03-2004 |
| | | | | CN | 1694856 | A | 09-11-2005 |
| | | | | EP | 1555252 | A1 | 20-07-2005 |
| | | | | EP | 2017240 | A1 | 21-01-2009 |
| | | | | EP | 2213636 | A1 | 04-08-2010 |
| | | | | US | 2005252446 | A1 | 17-11-2005 |
| | | | | US | 2008274871 | A1 | 06-11-2008 |
| | | | | WO | 2004020364 | A1 | 11-03-2004 |
| US 2019389778 | A1 | | 26-12-2019 | US | 2019389778 | A1 | 26-12-2019 |
| | | | | WO | 2018148524 | A1 | 16-08-2018 |
| US 2020102663 | A1 | | 02-04-2020 | EP | 3861584 | A1 | 11-08-2021 |
| | | | | JP | 2022503971 | A | 12-01-2022 |
| | | | | US | 2020102663 | A1 | 02-04-2020 |
| | | | | WO | 2020072553 | A1 | 09-04-2020 |
| JP H07126410 | A | | 16-05-1995 | NONE | | | |
| KR 20220081811 | A | | 16-06-2022 | NONE | | | |
| EP 0900249 | B1 | | 22-10-2003 | AU | 2928397 | A | 19-11-1997 |
| | | | | CA | 2252679 | A1 | 06-11-1997 |
| | | | | CN | 1217004 | A | 19-05-1999 |
| | | | | EP | 0900249 | A1 | 10-03-1999 |
| | | | | JP | 4361608 | B2 | 11-11-2009 |
| | | | | JP | 2000510510 | A | 15-08-2000 |
| | | | | JP | 2007080815 | A | 29-03-2007 |
| | | | | WO | 9741168 | A1 | 06-11-1997 |
| WO 2006036957 | A2 | | 06-04-2006 | US | 2006065522 | A1 | 30-03-2006 |
| | | | | WO | 2006036957 | A2 | 06-04-2006 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20190389778 A1

- WO 2020016068 A

**Non-patent literature cited in the description**

- **MEYNEN V. et al.** *Current Organic Chemistry,* 2014, vol. 18 (18), 2334-2350

- **CHRISTOPHER G. ARGES ; LE ZHANG.** *ACS Appl. Energy Mater.,* 2018, vol. 1 (7), 2991-3012